(19) Europäisches Patentamt
European Patent Office
Office européen des brevets

(11) **EP 2 021 190 B2**

(12) **NOUVEAU FASCICULE DE BREVET EUROPEEN**
Après la procédure d'opposition

(45) Date de publication et mention de la décision concernant l'opposition:
**14.12.2016 Bulletin 2016/50**

(45) Mention de la délivrance du brevet:
**14.05.2014 Bulletin 2014/20**

(21) Numéro de dépôt: 07731412.8

(22) Date de dépôt: **04.05.2007**

(51) Int Cl.:
**B60B 1/00** $^{(2006.01)}$    **B60B 1/04** $^{(2006.01)}$
**B60B 21/06** $^{(2006.01)}$    **B60B 1/14** $^{(2006.01)}$

(86) Numéro de dépôt international:
**PCT/FR2007/000767**

(87) Numéro de publication internationale:
**WO 2007/135259 (29.11.2007 Gazette 2007/48)**

(54) **ROUE A RAYONS**

SPEICHENRAD

SPOKE WHEEL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.05.2006 FR 0604237**

(43) Date de publication de la demande:
**11.02.2009 Bulletin 2009/07**

(73) Titulaire: **MAVIC S.A.S.**
**74370 Metz-Tessy (FR)**

(72) Inventeurs:
• **MERCAT, Jean-Pierre**
**F-74650 Chavanod (FR)**

• **MOUZIN, Olivier**
**F-74210 Montmin (FR)**

(74) Mandataire: **Lang, Johannes**
**Bardehle Pagenberg Partnerschaft mbB**
**Patentanwälte, Rechtsanwälte**
**Prinzregentenplatz 7**
**81675 München (DE)**

(56) Documents cités:
**EP-A2- 1 216 849      EP-A2- 1 283 112**
**EP-A2- 1 375 195      WO-A-03/018331**
**DE-U1- 20 017 074     GB-A- 144 541**

**EP 2 021 190 B2**

**Description**

L'invention concerne un rayon pour une roue à rayons, notamment une roue de cycle. L'invention concerne également une roue à rayons ayant au moins un tel rayon, ainsi qu'un engin de roulage, notamment un cycle, équipé d'au moins une telle roue.

La roue existe depuis la nuit des temps. Les premières roues étaient pleines. Une première amélioration a consisté à construire des roues à bâtons qui étaient plus légères. Ces bâtons étaient sollicités en compression et flexion par une jante. Puis la roue a été cerclée par un anneau métallique et les bâtons ont été précontraints en compression. La demande de brevet CH 91759 décrit un tel mode de construction.

L'invention de la roue à rayons à fils en tension remonte vers l'année 1866, elle est attribuée à Eugène Meyer. Cette invention a permis de construire des roues en diminuant considérablement la section des rayons, d'où un gain de poids très important. Egalement il est devenu possible d'augmenter le diamètre des roues, et donc d'augmenter leur développement comme cela a été le cas avec les grands bis en acier dont le pédalier était en prise directe sur la roue motrice. Par la suite les termes rayons en traction / en tension seront utilisés indifféremment pour une tension positive des rayons.

De façon classique une roue à rayons actuelle comprend une jante périphérique qui est prévue pour recevoir un pneumatique, un moyeu central et des rayons de liaison entre la jante et le moyeu. Le nombre des rayons est variable selon le type de roues, il varie généralement entre douze et quarante. En règle générale les rayons sont répartis selon deux nappes qui relient la jante à une extrémité du moyeu. Les rayons de chacune des nappes forment un angle avec le plan médian de la jante qu'on a coutume d'appeler l'angle de parapluie.

Les rayons relient structurellement la jante et le moyeu, ce qui permet de donner à la roue une bonne rigidité et une bonne résistance aux efforts. Les charges externes auxquelles une roue est soumise lors de son utilisation peuvent être décomposées en un effort radial dirigé selon le plan médian de la jante, un effort latéral dirigé perpendiculairement à ce plan, un effort moteur ou inversement un effort de freinage tangent au cercle de la roue qui correspond à la transmission d'un couple entre le moyeu et la jante.

Le document EP 1283112 décrit une roue à rayons en tension qui propose d'utiliser des jeux de rayons radiaux associés à des jeux de rayons non-radiaux afin de limiter les risques de cassure.

Il existe actuellement d'autres constructions de roues que les roues à rayons en tension. On connaît par exemple les roues pleines ou des roues dites à bâtons qui sont réalisées en matériau composite et qui sont utilisées principalement pour leurs propriétés aérodynamiques. Les demandes de brevet WO 2004/033231 et FR 2701899 décrivent de telles roues. Il existe aussi des roues moulées réalisées en alliage léger (aluminium, magnésium ou titane). De telles roues sont par exemple connues des demandes de brevet EP 1016552 et WO 2004/108515.

Toutefois parmi ces différents modes de construction d'une roue, c'est encore la roue à rayons en tension qui donne le meilleur compromis entre la légèreté et la résistance pourvu qu'elle soit bien construite et bien ajustée.

On estime couramment que plus les rayons sont tendus, plus la roue est rigide. Cependant cette estimation est erronée car une tension excessive des rayons d'une roue la rend en fait plus souple et de plus la fragilise. En effet si les rayons sont trop tendus, le risque de flambage de la jante sous l'effort de compression de la jante induit par les rayons devient important. Un autre problème lié à une tension excessive des rayons est la variation de diamètre de la roue entre avant et après sa mise sous tension. Contrairement au préjugé courant qu'il est nécessaire de tendre les rayons de la roue au maximum, un des problèmes des roues à rayons en tension réside donc dans l'application d'une tension correcte, et pas excessive.

En règle générale on estime que la tension des rayons doit être suffisante pour qu'aucun rayon ne se détende au cours d'une utilisation normale de la roue. En effet, si un rayon se détend momentanément, il devient inexistant au regard de la jante et des autres rayons, et de ce fait la roue perd localement sa rigidité.

Il faut considérer la jante, le moyeu et les rayons comme une structure dans laquelle existe un équilibre de forces. La tension de chacun des rayons est reprise par le moyeu, la jante et les autres rayons. Un effort appliqué sur le moyeu ou sur la jante se répercute sur l'ensemble des rayons. Pour une roue arrière il faut aussi prendre en considération le niveau de tension différent dans les rayons situés du côté de la roue libre et les rayons situés du côté opposé à la roue libre du fait de la différence d'ouverture de parapluie entre les deux nappes. Enfin selon l'orientation des rayons dans la nappe, selon que le rayonnage est radial ou croisé notamment, la tension des rayons peut être différente. Lorsqu'on construit une roue à rayons, on tend les rayons suffisamment afin que ceux-ci ne se détendent pas en utilisation normale.

Ainsi, on estime généralement qu'une roue doit pouvoir supporter les charges suivantes sans qu'aucun rayon ne se détende

- au moins 1500 Newtons d'effort radial pour une roue arrière, 1200 Newtons pour une roue avant,
- au moins 200 Newtons d'effort latéral,
- au moins 150 Newtons.m (Newtons par mètre) de couple moteur pour la roue arrière,
- au moins 300 Newtons.m de couple de freinage pour une roue avant avec système de freinage au moyeu, et 150 Newtons.m pour une roue arrière de même type.

Ces chiffres sont donnés à titre indicatif seulement et ne sont pas limitatifs. En effet ils dépendent de la pratique exercée et aussi de la corpulence du cycliste.

Une autre raison pour laquelle on considère usuellement qu'un rayon doit être constamment tendu est la suivante. Un rayon présente une section très faible comparativement à sa longueur. Si la tension devient négative, c'est-à-dire si la contrainte du rayon devient une compression, le rayon flambe immédiatement.

Une roue à rayons en tension donne de bons résultats, mais elle présente malgré tous quelques inconvénients.

En premier lieu la tension des rayons induit des contraintes de compression dans le corps de la jante. On estime que pour une roue de vélo de route à 36 rayons, chacun des rayons étant tendu à 1000 Newtons, l'effort de compression résultant au niveau du corps de la jante est de 5730 Newtons, ce qui induit une contrainte de compression de 88 MPa, qui représente pour un matériau usuel de jante (alu 6106 par exemple) déjà 40% du potentiel de résistance intrinsèque de matériau (220 MPa). Autrement dit cette compression induite affaiblit déjà considérablement la jante.

Par ailleurs, pour une jante de 622 mm de diamètre, cet effort de compression conduit à une réduction de la développée de la jante pouvant atteindre 2,5mm, ce qui, naturellement peut avoir une incidence sur la liaison entre la jante et le pneu et peut conduire à des déjantages intempestifs et des accidents.

En second lieu, la tension des rayons s'exerce de façon locale sur la jante. Chaque rayon induit par sa tension un effort de cisaillement local au niveau de sa zone d'accrochage ainsi qu'un moment de flexion variable entre chaque trou de rayon. Le moment de flexion conduit à une déformation polygonale de la jante, appelée couramment "saut", avec un voile local au niveau de chaque zone d'accrochage de rayon.

Les demandes de brevet EP 1316442 et FR 1019285 prévoyant un rayonnage appairé illustrent ces deux phénomènes auxquels elles tentent d'apporter une solution. Au passage on peut souligner que le fait d'accrocher les rayons par paires au niveau de la jante, comme décrit dans le EP 1316442, atténue bien l'effet de voile local, mais accentue l'effet polygonal.

Pour résoudre ce problème le EP 1316442 propose de partir d'une jante prédéformée à l'opposé (cf. figure 5 de ce brevet), ce qui est délicat à mettre en oeuvre.

Enfin, on a remarqué que la durée de vie d'une roue, c'est-à-dire de chacun de ses composants est sensiblement inversement proportionnelle à la tension des rayons. Au cours de la rotation de la roue chaque rayon est soumis à un cycle de chargement et déchargement et chaque rayon soumet localement la jante à un tel cycle de chargement et déchargement. Ces cycles répétés finissent par endommager le rayon ou la jante et ceci d'autant plus rapidement que la tension dans le rayon est élevée. De ce fait les roues actuelles à rayons tendus n'ont pas une durée de vie optimale. Compte-tenu de cet état de la technique, il existe un besoin pour une construction de roue conciliant rigidité, résistance, et durée de vie optimale.

Il existe également un besoin pour une roue dont les caractéristiques géométriques (voile, saut, développé) restent les plus stables possibles.

EP 1 283 112 décrit le préambule de la revendication 1.

Ces buts et d'autres buts qui apparaîtront au cours de la description qui va suivre sont résolus par le nouveau concept de roue selon l'invention. Notamment ce ou ces buts sont atteints par la partie caractérisante de la revendication 1.

De ce fait et contrairement au préjugé courant les rayons travaillent alternativement en traction, compression et ont de ce fait besoin d'être beaucoup moins tendus. Les caractéristiques géométriques et la durée de vie de la roue en sont fortement améliorées.

De toute façon l'invention sera mieux comprise en se référant à la description ci-dessous et aux dessins schématiques qui sont annexés et dans lesquels :

Les figures 1 à 2 représentent des diagrammes de variation de tension dans les rayons selon différents modes de chargement d'une roue traditionnelle.

Les figures 3 et 3A sont des vues similaires aux figures 1 et 2 pour une roue selon l'invention.

La figure 4 est une vue en perspective d'une roue arrière selon un mode non limitatif de mise en oeuvre de l'invention.

La figure 5 est une vue en section partielle d'un rayon selon un premier mode de mise en oeuvre de l'invention.

La figure 6 illustre l'accrochage du rayon de la figure 5 à la jante.

La figure 7 montre l'accrochage du rayon de la figure 5 au moyeu.

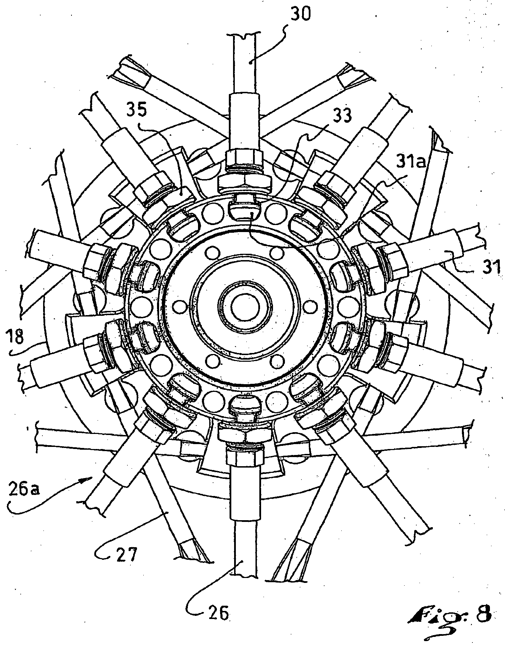

La figure 8 montre le moyeu vu du côté opposé à la roue libre.

Les figures 9 à 13 illustrent diverses variantes de réalisation relativement à l'accrochage des rayons au moyeu.

La figure 14 est une vue en perspective d'une roue avant selon un autre mode de mise en oeuvre de l'invention.

La figure 15 illustre l'accrochage des rayons au moyeu.

La figure 16 montre en perspective la bague qui retient les têtes d'accrochage de rayons au niveau du moyeu.

La figure 17 illustre l'accrochage des rayons à la jante.

La figure 18 est relative à une variante d'accrochage des rayons au moyeu.

La figure 19 montre pour ce mode d'exécution l'accrochage du rayon à la jante.

La figure 20 est une vue en section partielle qui illustre un autre mode de mise en oeuvre de l'invention.

La figure 21 montre un autre mode d'accrochage d'un rayon à la jante.

La figure 22 illustre un autre mode d'accrochage du rayon au moyeu.

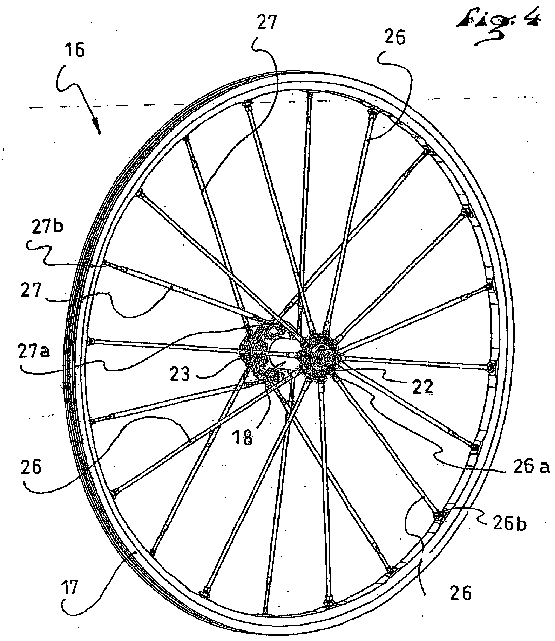

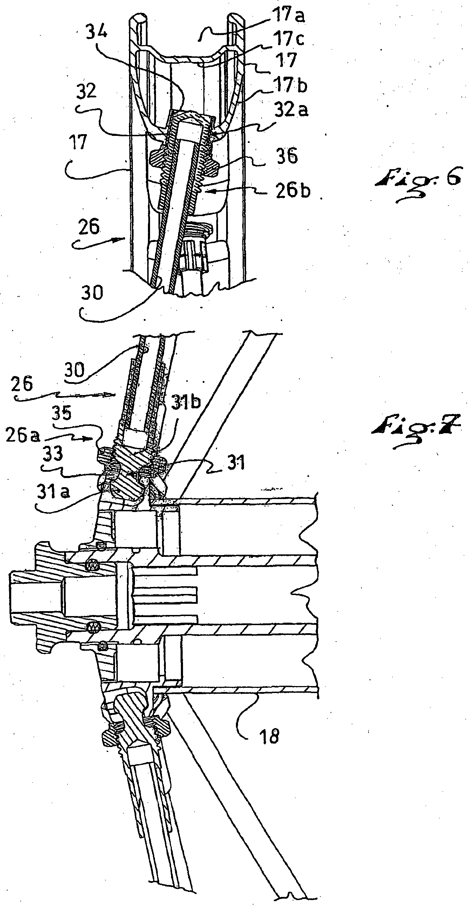

La roue 16 représentée en figure 4 est une roue arrière. De façon classique cette roue comprend une jante périphérique 17, un moyeu central 18 et des rayons 26, 27 de liaison entre la jante et le moyeu. La jante 17 est de tout type approprié, notamment elle présente une structure creuse en caisson avec un canal 11a de réception d'un pneu à sa périphérie, deux parois latérales 17b réunies par un ou plusieurs ponts 17c (cf. figure 6). Les rayons 26, 27 ont un corps longiligne qui définit pour chaque rayon une direction longitudinale et deux extrémités d'accrochage respectivement 26a, 26b ; 27a, 27b par lesquelles ils sont accrochés d'un côté au moyeu et de l'autre à la jante.

Le moyeu 18 possède deux extrémités axiales 22 et 23, l'une des extrémités, en l'occurrence l'extrémité 23 porte une roue libre de transmission dont le corps se devine dans la figure 4 à l'arrière plan. Les rayons 26, 27 sont répartis ici en deux nappes, les rayons de chacune des nappes étant accrochés à une extrémité 22, 23 du moyeu. L'une des nappes est composée de rayons 26 accrochés à l'extrémité 22 opposée à la roue libre. L'autre nappe de rayons est composée de rayons 27 accrochés à l'extrémité 23 du moyeu située du côté de la roue libre. A cause de la présence du corps de roue libre, la nappe des rayons 27 est plus aplatie que la nappe des rayons 26, car ses rayons forment un angle de parapluie avec le plan radial médian de la jante qui est plus petit que l'angle formé par les rayons 26 et le plan radial médian. Ceci est connu dans l'état de l'art.

La figure 4 représente des rayons 27 côté roue libre qui sont croisés, et des rayons 26 côté opposé à la roue libre qui sont radiaux. Ceci n'est pas limitatif et tout autre mode de rayonnage peut convenir, notamment un mode de rayonnage croisé pour les deux nappes, ou un mode de rayonnage radial du côté de la roue libre et un mode de rayonnage croisé du côté opposé. Egalement la section de la jante pourrait être asymétrique.

La jante 17 est en équilibre par rapport au moyeu 18 du fait des contraintes de liaison qui transitent par les rayons 26, 27 des deux nappes. L'équilibre est radial et axial, c'est-à-dire que les composantes des efforts radiaux et axiaux que les rayons exercent sur la jante ou le moyeu ont une résultante nulle. Compte tenu de la différence d'angles de parapluie, les rayons 27 de la nappe du côté de la roue libre sont davantage contraints que les rayons 26 de l'autre nappe, pour que l'équilibre axial de la jante soit atteint.

Selon une particularité de l'invention, au moins les rayons 26, côté opposé roue libre sont prévus de façon à résister à une contrainte de compression et on abaisse le niveau général de tension des rayons au moins côté opposé roue libre.

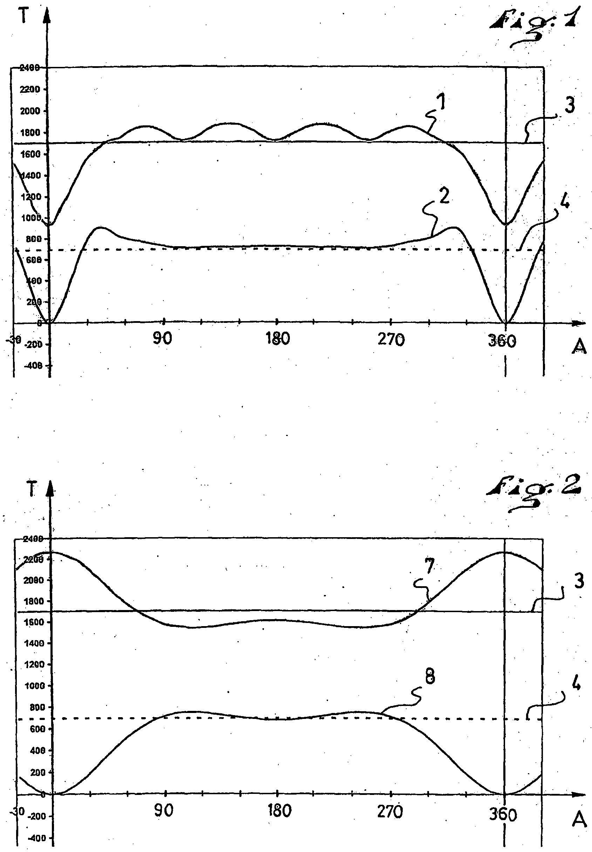

En effet, les figures 1 à 2 représentent des diagrammes de variation de tension dans les rayons selon différents modes de chargement de la roue, respectivement radiaux et latéraux pour une roue à rayons en tension traditionnelle.

Le chargement radial est le type d'effort prépondérant sur une roue. Des tests de charge radiale ont été faits sur une roue arrière à vingt rayons chargée radialement à 1500 Newtons. La tension T d'un rayon a été mesurée tout au long de la révolution du rayon autour du moyeu. La figure 1 donne les diagrammes de la variation de tension T en fonction de l'angle de rotation A que l'on a relevée dans un rayon situé du côté de la roue libre (courbe 1) et un rayon situé du côté opposé à la roue libre (courbe 2) dans une roue normale. Dans cette figure, les droites horizontales 3 et 4 correspondent à la tension initiale des rayons en l'absence de charge externe à savoir respectivement 1700 N et 692 N. La charge radiale de 1500 Newtons a été ajustée en fonction de la tension initiale des rayons pour que la tension minimale d'un rayon situé du côté opposé à la roue libre passe par une valeur minimale nulle que l'on rencontre à 0 et 360 degrés (cf. courbe 2). On peut constater que cette tension est minimale au moment où le rayon est orienté dans la direction de la surface d'appui. De part et d'autre de cette position on observe une variation progressive de tension dans une plage de 35 degrés. Le reste du temps la tension dans le rayon est relativement constante.

Naturellement le diagramme et les valeurs indiquées n'ont pas de valeur limitative, ils sont donnés seulement pour illustrer le problème à la base de l'invention.

La figure 2 illustre les variantes de tension dans les rayons d'une roue traditionnelle pour un chargement latéral.

Le chargement latéral d'une roue se produit lorsque le cycliste se met en danseuse ou lorsque le vélo est incliné en courbe. Sur un banc de test on a contraint la roue précédente avec une charge latérale de 244 Newtons exercée sur la jante et orientée du côté de la roue libre vers le côté opposé. La tension d'un rayon a été mesurée tout au long de la révolution du rayon autour de la roue. La courbe 7 représente les variations de tension d'un rayon côté "roue libre", la courbe 8, celle d'un rayon "opposé roue libre". On constate dans la zone d'application de l'effort une augmentation de tension des rayons situés du côté de la roue libre (courbe 7 de la figure 2), et une détente des rayons situés du côté opposé (courbe 8). La variation de tension est maximale dans la zone d'application de la charge, et il y a une variation progressive de tension dans une plage de 90 degrés de part et d'autre de la zone d'application de la charge. Si on change le signe de la charge latérale appliquée, le risque de détente d'un rayon est très faible, car la détente affectera alors la nappe roue libre qui est initialement beaucoup plus tendue (1700 N au lieu de 692 N pour les rayons de la nappe opposé roue libre.

Par ailleurs les mesures (non représentées dans la présente demande) montrent également que le chargement en couple affecte les rayons croisés, selon qu'ils sont orientés ou non dans le sens de l'effort à transmettre à la jante.

Pour une roue arrière, les rayons dits tracteurs se retendent lors de la transmission du couple et les rayons dits non tracteurs se détendent.

Lors de l'utilisation du cycle, ces trois modes de chargement de la roue se combinent et se cumulent. Les diagrammes montrent que pour chaque rayon, la tension de celui-ci varie autour de la tension initiale. Or c'est ce cycle de chargement répété qui vient endommager le rayon par fatigue. La tenue en fatigue d'une éprouvette sollicitée en traction alternée est fonction de la contrainte maximum ainsi que de l'amplitude de chargement.

La durée de vie d'un rayon sollicité uniquement en traction est donc réduite en fonction de l'amplitude et aussi de la contrainte maximum qui croît avec la tension initiale des rayons.

Toute augmentation de la tension initiale d'un rayon réduit donc la durée de vie de celui-ci.

Une modélisation, montre que la réduction de la tension des rayons côté roue libre de 1300 - 970 = 330 N représente une chute de tension des rayons côté opposé roue libre de seulement 620 - 462 = 158 N et multiplie par 10 la durée de vie de la roue.

On voit donc que contrairement au préjugé actuel de l'homme du métier, réduire la tension des rayons permettrait d'améliorer considérablement l'endurance non seulement des rayons, mais aussi de la jante et du moyeu qui subissent exactement les mêmes cycles de chargement que le rayon.

Cette constatation amène le concept selon l'invention qu'une roue pour être endurante ne doit, contrairement aux idées reçues, pas être trop tendue, mais doit quand même l'être suffisamment pour éviter des détentes en utilisation normale.

Selon l'invention, les rayons sont conçus de façon à reprendre un effort de compression de façon à diminuer d'autant la tension initiale de chaque rayon et de réduire les inconvénients liés aux rayons trop tendus.

En pratique chaque rayon est prévu de façon à ne pas flamber sous un effort de compression significatif (> 150 N par exemple), et comporte à chaque extrémité des liaisons bilatérales qui permettent de transmettre à la fois un effort de compression et de traction sans jeu.

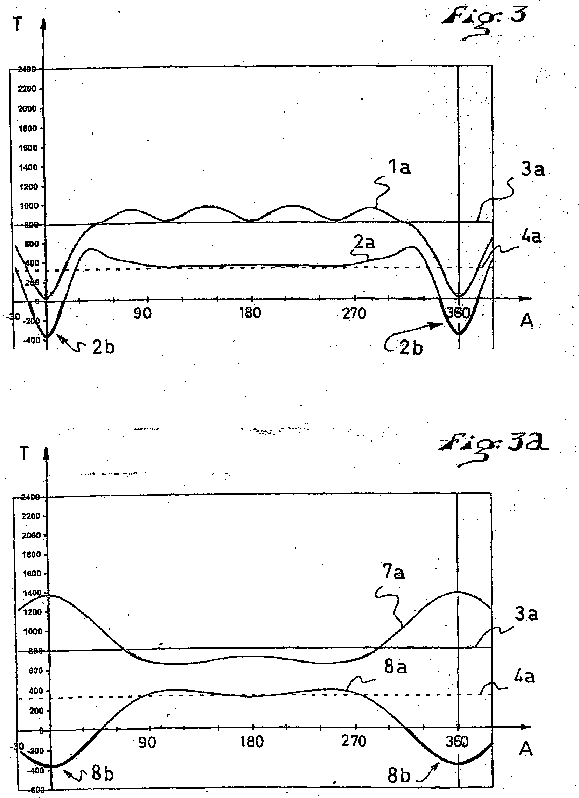

Par ailleurs la roue est tendue à des valeurs de tension initiales inférieures à celles d'une roue traditionnelle et notamment à une tension initiale correspondant à une valeur Ti traditionnelle diminuée de l'effort de compression R auquel le rayon résiste sans flambage. Les figures 3 et 3A représentent les diagrammes de variation de tension dans les rayons selon des modes de chargement respectivement radial et latéral pour une roue selon l'invention. Les mêmes références affectées d'un indice a sont utilisées pour les courbes illustrant les variations de tension des rayons côté roue libre et opposé roue libre.

Si on compare les figures 1 et 2, et 3 et 3A, cela signifie qu'on abaisse les courbes le long de l'axe des ordonnées. En l'absence de charge externe, les rayons sont contraints en traction mais à un niveau inférieur à celui de l'état de la technique courant. En pratique la tension initiale Ti des rayons côté roue libre est à 800 N (cf. droite 3a), soit quasiment la moitié par rapport à une roue classique (cf. droite 3 - figures 1 et 2), et celle des rayons côté opposé roue libre est de 325 N (cf. courbe 4a), soit plus de la moitié par rapport aux figures 1 et 2 (droite 4). Sous l'effet d'une charge externe élevée, notamment une charge radiale, ou d'une somme de charges externes (cf. courbes 2a et 8a), la contrainte d'une partie au moins des rayons à savoir ceux situés côté opposé roue libre, change de signe momentanément, c'est-à-dire qu'elle devient une contrainte de compression (2b, 8b). On s'arrange pour que de la structure des rayons en question soit apte à supporter un cycle de contraintes de traction et de compression sans détente ni flambage pour qu'à aucun moment de son cycle de chargement un rayon ne se dérobe dans son rôle de liaison entre la jante et le moyeu.

Selon un mode de réalisation, pour la roue 16 de la figure 4, les rayons concernés sont les rayons 26 situés du côté opposé à la roue libre, à cause de leur tension initialement moins élevée que celle des rayons 27 situés côté roue libre. Globalement on considère que pour une roue arrière les rayons 26 situés de ce côté sont sensiblement deux fois moins tendus que les rayons 27 de l'autre nappe. Ces rayons 27 étant davantage tendus que les rayons 26, on ajuste de préférence les niveaux de tension initiale pour que la contrainte dans ces rayons 27 reste une contrainte de traction dans la plage de charge externe admissible pour la roue. Toutefois, ceci n'est pas limitatif, et on peut construire la roue de telle façon que les rayons 26, 27 des deux nappes soient tous aptes à supporter de façon momentanée une contrainte de compression sans détente ni flambage, et pas seulement les rayons 26 situés côté opposé roue libre.

Il en est de même pour une roue qui comporte des nappes de rayons asymétriques du fait de la présence d'un disque de freinage au niveau du moyeu.

Une roue avec deux nappes de rayons symétriques sera décrite ultérieurement.

A titre d'illustration non limitative, selon le concept inventif, on a construit une roue telle que la roue 16, avec des rayons 26 initialement tendus à 325 Newtons, et des rayons 27 tendus initialement à 800 Newtons (valeur Ti), ces rayons 26 supportent une charge de compression R d'au moins 367 N (i.e. 692 N - 325 N). En comparaison, les roues traditionnelles de ce genre sont tendues à 1700 Newtons (courbe 3) du côté de la roue libre, et 692 Newtons (courbe 4) du côté opposé (cf. figure 1).

Dans le cas présent, l'invention permet donc de réduire quasiment par deux les efforts de tension sur les rayons, d'où une augmentation significative de la durée de vie, et réduction significative des problèmes de géométrie (saut, voile.....etc).

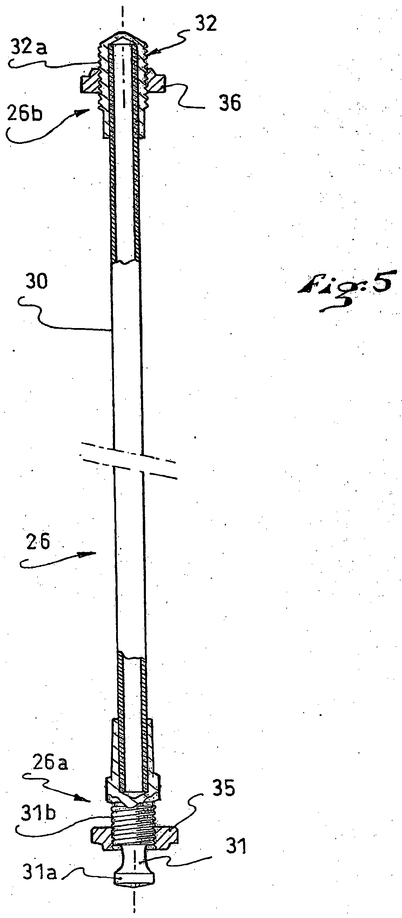

Selon un mode de réalisation, la structure des rayons 26 situés du côté opposé à la roue libre les rend apte à supporter sans flambage une contrainte de compression R d'au moins 150 Newtons,- exercée entre les deux extrémités du rayon selon la direction longitudinale définie par le corps de rayon. Bien entendu, la valeur de contrainte de compression pouvant être supportée par les rayons 26 peut être différente. Dans l'exemple décrit précédemment mais non limitativement, une valeur de 367 N est nécessaire et dans l'exemple décrit ultérieurement en liaison avec la figure 5 le rayon peut supporter une charge supérieure à 400 N sans flambage.

Les rayons ont par ailleurs un dispositif de mise en tension, de préférence un dispositif micrométrique situé entre les deux extrémités d'accrochage afin d'ajuster leur mise sous tension initiale. Le dispositif le plus courant est du type vis/écrou. Une particularité de ce dispositif de mise en tension est que la vis et l'écrou ne sont jamais serrés à force l'un contre l'autre, contrairement à un dispositif d'assemblage. La vis ou l'écrou peuvent toujours être tournés l'un relativement à l'autre pour ajouter ou enlever de la tension dans le rayon.

Egalement la liaison d'accrochage entre les extrémités de rayon, la jante et le moyeu est une liaison bilatérale c'est-à-dire apte à travailler en traction comme en compression, avec un dispositif additionnel de neutralisation du jeu de liaison qui est apte à supporter au moins la contrainte de compression qu'on a fixée pour la structure du rayon.

La figure 5 représente la structure d'un rayon 26 selon un premier mode de construction. Le rayon représenté comprend un corps 30 longiligne prolongé à chacune de ses extrémités par une tête d'accrochage, 31 et 32.

La structure du rayon 26 lui permet de supporter une sollicitation en traction et aussi une sollicitation en compression. Notamment il est prévu pour supporter une sollicitation en traction supérieure à celle d'un rayon conventionnel (2800 N), et il présente une résistance au flambage supérieure à 150 Newtons et en l'occurrence supérieure à 400 N. Selon le mode de réalisation illustré, le corps 30 du rayon est formé par un tube cylindrique creux de révolution. On peut également prévoir un rayon de forme cylindrique plein, l'avantage d'un rayon tubulaire étant son rapport résistance au flambage / poids. Le tube est réalisé en tout matériau approprié métallique ou composite. De façon avantageuse le tube est réalisé en fibres de carbone noyées dans une matrice de résine. Toute résine appropriée convient, par exemple une résine époxy ou polyester. Par exemple on réalise un tube par extrusion de fibres de carbone pultrudées dont on découpe ensuite des portions à la longueur voulue. Le carbone a un module d'élasticité élevé et une densité faible comparé à un alliage métallique comme un acier inoxydable ou un alliage d'aluminium ou de magnésium. Sous sa forme composite (module de flexion très élevé), il est très rigide en traction / compression et donc flexion et est par ailleurs très léger, ce qui lui assure une bonne résistance au flambage.

Pour améliorer la résistance du rayon au flambage la section du corps 30 a des dimensions importantes comparées à celles d'un rayon traditionnel. A titre indicatif, le tube qui forme le corps a un diamètre de 4 millimètres, et une épaisseur de paroi comprise entre 5/10 et 1 millimètre. Comparativement, un rayon traditionnel en inox a un diamètre de fil inférieur ou égal à 2 millimètres (en général diamètre compris entre 1,2 et 2,3 mm). La section du corps est ici circulaire, ce n'est pas limitatif et d'autres formes de section peuvent aussi convenir. Un tel rayon en forme de poutre creuse a une rigidité en flexion bien supérieure à celle d'un rayon plein normal à section équivalente.

En résistance des matériaux, l'effort de compression que peut subir une poutre droite avant de flamber est fonction des conditions d'encastrement de ses extrémités, du module d'Young du matériau de la poutre, du moment quadratique minimum de la section de la poutre, et de la longueur de la poutre entre les points d'application de l'effort.

L'effort de compression maximum admissible est donné par la relation suivante :

$$F = \pi^2 \, EI / (KL)^2 \text{ (formule d'Euler)}$$

où K est un coefficient qui est fonction des conditions d'encastrement des extrémités,

K=0,5 pour une poutre ayant ses deux extrémités encastrées,

K=1 pour une poutre ayant ses deux extrémités montées avec une liaison du type à rotule,

K=2 pour une poutre ayant une extrémité encastrée et une extrémité libre,

K=4 pour une poutre ayant ses deux extrémités libres,

E désigne le module d'Young du matériau de la poutre en MégaPascals,

I est le moment quadratique de la section de la poutre en mm$^4$, par exemple I=a$^4$/12 pour une poutre de section carrée de côté a (mm),

L est la longueur de la poutre entre son point d'appui et le point d'application de l'effort de compression.

A titre de comparaison, selon la relation énoncée plus haut, un rayon de l'art antérieur ayant un diamètre de 2 millimètres en inox (E=195 GigaPascals) et une longueur de 280 mm présente une résistance au flambage de 22 N dans le cas où ses extrémités sont montées avec une liaison du type à rotule, ce qui est plus proche de la réalité. Pour un rayon plat, les valeurs sont encore plus faibles (de l'ordre de 7 N).

Un rayon tubulaire en carbone pultrudé (E=115GPa) de 4 mm de diamètre, et de 280 mm de longueur présente dans les mêmes conditions une résistance au flambage de 715 N si ses extrémités sont encastrées, et 179 N dans le cas où ses extrémités présentent une liaison du type à rotule. Un tel rayon tubulaire en carbone est bien plus léger qu'un rayon en acier tout en admettant une charge de compression de l'ordre de huit fois supérieure. Le type de liaison d'accrochage aux extrémités du rayon joue également un rôle important, puisqu'il est susceptible d'influer dans un rapport de un à quatre.

Vers chacune de ses extrémités le corps 30 du rayon est prolongé par une tête d'accrochage 31, 32. Selon le mode de réalisation représenté, les têtes 31 et 32 sont formées par deux embouts rapportés dans le prolongement du corps. Les extrémités du corps 30 sont emmanchées dans les embouts 31, 32 et assemblées sans jeu par tout moyen approprié, notamment par collage, par goupillage, vissage ou toute autre technique. Le mode d'assemblage par emmanchement et collage donne une bonne résistance en traction et en compression de la liaison entre le corps et ses embouts. Aussi, le diamètre important du corps de rayon permet de réaliser un assemblage résistant par collage du fait de la circonférence importante du tube et donc de la surface de collage importante à section équivalente.

Dans l'exemple décrit, la structure du rayon lui permet de supporter une contrainte de compression de 400 N, donc d'au moins 150 Newtons. Cette charge de compression admissible peut encore être augmentée par un encastrement des extrémités du rayon dans la jante et le moyeu.

Les embouts sont prévus pour être accrochés d'un côté à la jante et de l'autre au moyeu. De plus, sur la longueur du rayon, il existe un dispositif de mise en tension du rayon, de préférence un dispositif micrométrique.

Selon le mode de réalisation illustré, la tête 31 présente une section élargie 31a qui est prévue pour être encastrée et retenue à l'intérieur d'un logement 33 usiné dans le corps du moyeu 18 et qui comporte un filetage 31b au-dessus de cette section élargie.

L'autre tête d'accrochage 32 a une extrémité filetée 32a qui est prévue pour être vissée dans un logement 34 de la jante. Le logement 34 a une forme de cheminée qui est taraudée sur l'intérieur, ainsi que cela est décrit par exemple dans la demande de brevet EP 818 328. Sa tension de repos est réglée à l'aide de la tête 32 qui est vissée plus ou moins profondément dans le logement 34 de la jante modulant ainsi la tension initiale du rayon.

Naturellement, tout autre moyen de liaison approprié pourrait également convenir.

Pour permettre aux rayons de passer de la traction à la compression sans dérobade par détente ou flambage, il est prévu un dispositif de neutralisation des jeux mécaniques de liaison entre les embouts, la jante et le moyeu. Selon le mode de réalisation illustrée, ce dispositif comprend du côté de la tête 31 un contre-écrou 35 apte à coopérer avec le filetage 31b, et du côté de la tête 32 un contre-écrou 36 apte à coopérer avec le filetage 32a. Ces deux contre-écrous 35, 36 sont vissés sur l'extérieur des embouts 31 et 32, ils sont serrés d'un côté contre le moyeu et de l'autre contre la jante Ainsi ils assurent une neutralisation du jeu de liaison qui pourrait exister entre eux, la tête 31 du rayon 26 et son logement 33, ou entre la tête filetée 32 et son logement 34.

L'assemblage est opéré de la façon suivante, le rayon 26 est assemblé au moyeu à l'aide de la tête 31, sa tension est ajustée à l'aide de la tête 32, puis les jeux de fonctionnement éventuels sont neutralisés à l'aide des écrous 35 et 36, qui sont serrés respectivement contre le moyeu et la jante. Ces contre-écrous améliorent également les conditions d'encastrement des extrémités du rayon et contribuent à élever sa charge de compression admissible avant flambage.

Le rayon 26 peut ainsi supporter indifféremment une charge en traction ou une charge en compression sans détente ni flambage, et assurer une liaison permanente entre le moyeu et la jante sous une tension moins élevée.

Comme les rayons 26 sont moins tendus, les rayons 27 de l'autre nappe (côté roue libre) sont également moins tendus et en l'occurrence pratiquement deux fois moins. Néanmoins comme la nappe de rayons 27 est plus aplatie que la nappe de rayons 26, les rayons 27 sont soumis à une tension positive tout au long de leur cycle de chargement (cf. figure 3). Comme ils ne sont pas comprimés, ces rayons 27 peuvent donc présenter une structure traditionnelle, par exemple ils peuvent être construits conformément à ce qui est décrit dans la demande de brevet EP 896 886. Tout autre mode de construction peut également convenir.

Comme la jante est moins sollicitée par la tension des rayons, les contraintes auxquelles elle est soumise sont plus faibles. La durée de vie de la roue est de ce fait prolongée. La même remarque est valable pour le moyeu.

La rigidité de la roue n'est pas modifiée par cette diminution de la tension des rayons. En effet, à tout moment de leur cycle de chargement respectif, tous les rayons établissent une liaison mécanique entre la jante et le moyeu même les rayons moins tendus du fait de leur liaison bilatérale. A aucun moment l'un d'eux ne se dérobe ou se détend, pourvu que les charges externes restent dans une plage de valeur admissible. Cette diminution de tension d'au moins une partie des rayons permet de diminuer les inconvénients d'une roue à rayons tendus et permet notamment :

- une diminution forte de compression de la jante,
- une diminution de la réduction du développée de la jante
- une augmentation de la résistance de la jante
- une diminution de l'effet polygonal
- une diminution de l'effet de voile induit
- une augmentation de la résistance à la fatigue

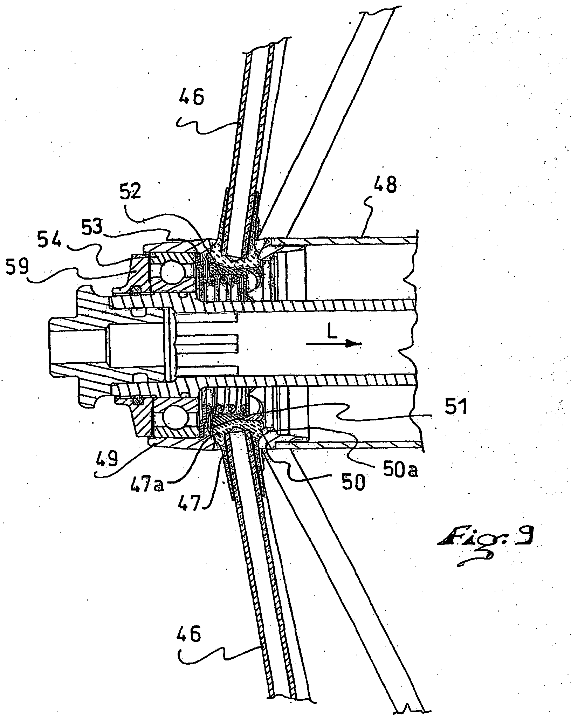

La figure 9 est relative à une variante de construction. Selon cette variante, les rayons 46, qui sont aptes à supporter une contrainte de compression, sont accrochés au moyeu 48 par l'intermédiaire d'un embout 47 qui forme une tête élargie 47a. Comme dans le cas précédent, par exemple, le corps du rayon 46 est emmanché et collé dans l'embout 47.

Les rayons 46 sont accrochés au moyeu 48 sur la paroi d'un bulbe latéral 49 qui présente des orifices 50 de forme tronconique dans lesquelles les rayons 46 sont enfilés, de telle façon que la tête élargie 47a soit retenue à l'intérieur du bulbe 49 par un rebord intérieur 50a de l'orifice 50. Une bague tronconique 51 est engagée dans le bulbe, sous les têtes élargies des rayons 46. De préférence, un ressort de compression 52 prenant appui sur une rondelle 53, en appui sur la bague extérieure, emmanchée à force, du roulement 54 exerce une précontrainte sur la bague 51 selon la direction longitudinale L. Le ressort 52 exerce une précontrainte sur la bague 51 dans la direction L d'engagement de sa surface tronconique sous les têtes élargies des rayons 46. Ainsi, la bague 51 maintient les têtes élargies en appui contre le rebord 50a de l'ouverture des orifices 50. La liaison d'accrochage entre les rayons 46 et le moyeu est rendue bidirectionnelle par cette bague 51. En outre, une sollicitation en compression exercée sur le moyeu par l'un des rayons 46 n'est pas susceptible de déplacer la bague 51, compte tenu de l'angle de conicité de sa surface tronconique, et de la sollicitation exercée par le ressort. La bague 51 neutralise le jeu des rayons à leur liaison avec le moyeu.

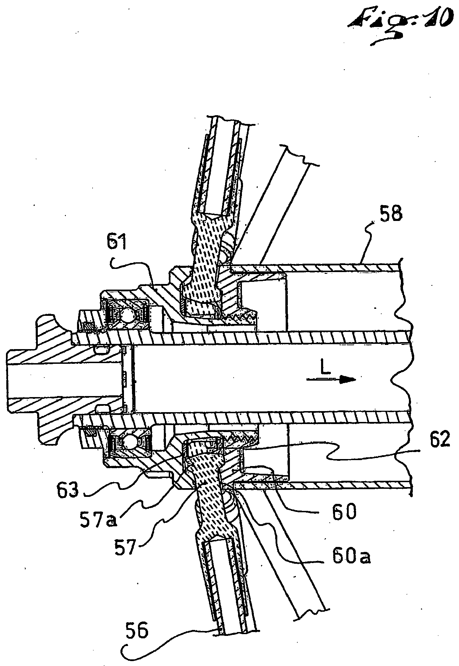

Selon la variante de la figure 10, le rayon 56 se termine du côté du moyeu 58 par un embout 57 muni d'une tête élargie 57a. Les têtes élargies 57a sont retenues dans un bulbe 60 qui a des encoches 60a ouvertes débouchant vers l'extérieur du moyeu. Les rayons 56 peuvent ainsi être mis en place par un simple engagement dans ces encoches 60a, sans qu'il soit nécessaire de les enfiler. Les encoches sont refermées par une cloche 61 qui est vissée sur le bulbe 60. Comme dans le cas précédent, une bague tronconique 62 est engagée dans le bulbe sous les têtes élargies 57a, et cette bague tronconique est contrainte par une rondelle élastique 63, selon la direction longitudinale L, qui est elle-même en contrainte par la cloche 61. Ce mode de réalisation permet un montage et un démontage plus facile des rayons 56.

En variante, on pourrait réaliser la bague 62 dans un matériau élastiquement déformable tel que élastomère de façon que le vissage de la cloche 61 dans le bulbe 60, vienne comprimer longitudinalement la bague élastomère 62, ce qui provoque son expansion radiale et garantit le plaquage des têtes 57 dans le bulbe 60. Ce qui est important est que la bague 62 maintienne chaque tête 57a en appui contre le bulbe 60 et qu'elle résiste à toute sollicitation de compression qu'un rayon pourrait lui transmettre dans la plage de valeur admissible.

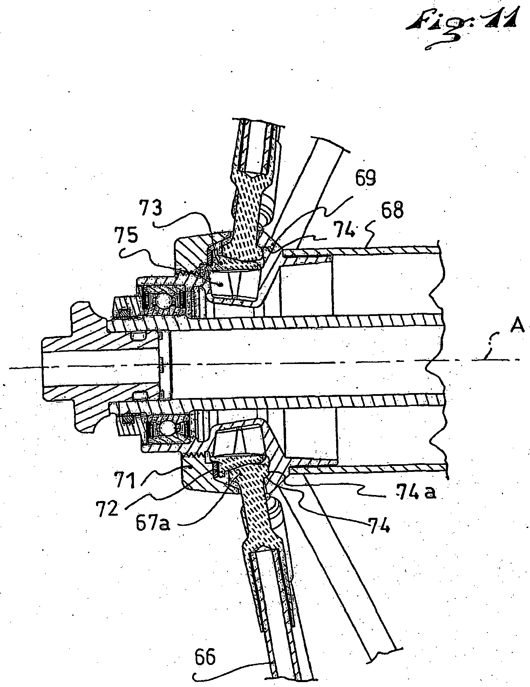

Selon l'exemple de la figure 11, les têtes élargies 67a des rayons 66 sont retenues dans les encoches ouvertes 74 du bulbe 69 de moyeu 68. Les encoches sont refermées par une cloche 71 qui est vissée sur l'extrémité du bulbe 69, et qui précontraint à l'aide d'une rondelle élastique 72 une bague tronconique 73. Comme précédemment, la bague tronconique maintient les têtes élargies 67a contre un retour 74a de l'ouverture des encoches 74, ce qui assure une liaison bidirectionnelle entre eux le rayon et le moyeu, avec neutralisation du jeu mécanique de liaison. En regard de chacune des encoches, le bulbe a des évidements usinés 75 en direction de l'axe A du moyeu dans lesquelles les têtes élargies 67a se logent momentanément pour permettre le vissage ou dévissage de l'autre extrémité du rayon. Le corps de rayon étant rigide, il faut en effet pouvoir le translater le long de son axe lors d'un vissage ou d'un dévissage du dispositif de mise en tension.

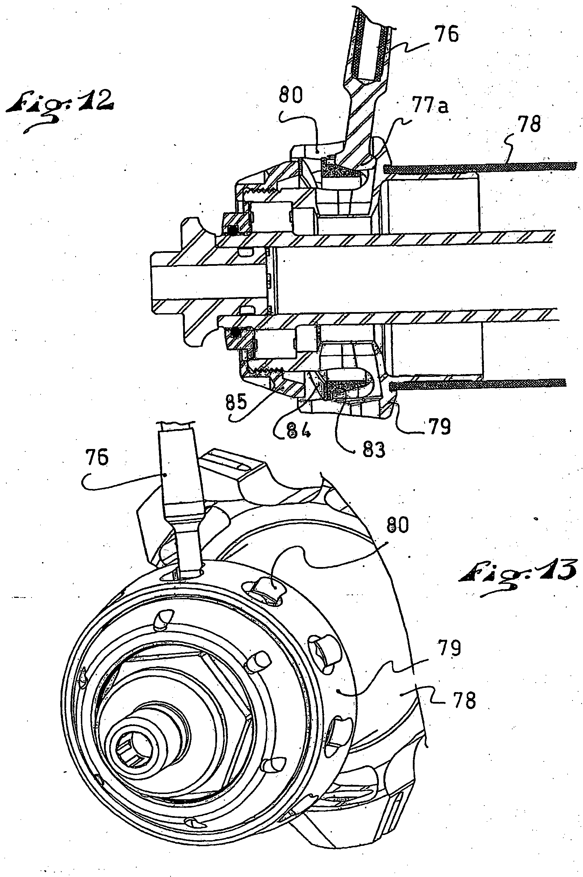

Selon le mode de réalisation des figures 12 et 13, le bulbe 79 du moyeu 78 est usiné avec des ouvertures 80 en forme de boutonnière. La tête élargie 77a d'un rayon 76 est accrochée au bulbe 79 par introduction dans la partie large de la boutonnière et elle est retenue dans la partie étroite. Comme précédemment, une bague tronconique 83 précontrainte par une rondelle élastique 84 et une cloche vissée 85 maintient les têtes élargies 77a en appui contre l'ouverture des boutonnières, assurant ainsi une liaison bidirectionnelle entre le rayon et le moyeu avec neutralisation du jeu mécanique à ce niveau.

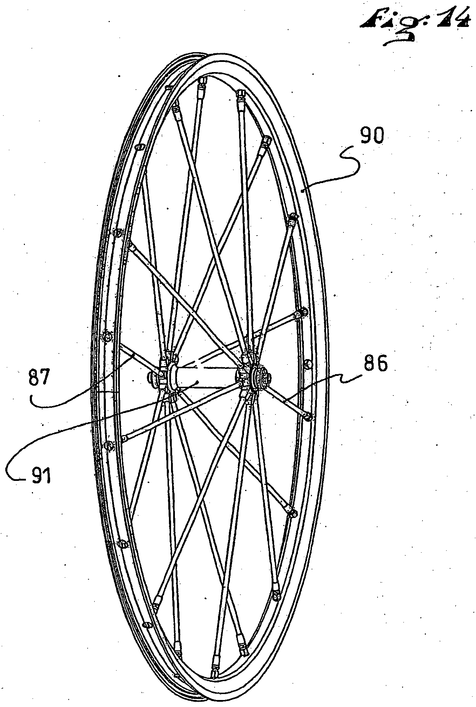

La figure 14 représente en perspective une roue avant dont les rayons 86 et 87 des deux nappes sont disposés de façon symétrique entre la jante 90 et le moyeu 91. Les rayons 86 et 87 des deux nappes sont agencés de façon radiale, ce qui est un mode usuel de construction d'une roue avant. Toutefois ce n'est pas limitatif, et d'autres modes de rayonnage peuvent également convenir. Selon le mode de réalisation illustré, les rayons 86 et 87 ont une structure qui les rend apte à être sollicités en traction ainsi qu'en compression. Les rayons 86 et 87 sont tendus initialement avec un niveau de tension inférieur à celui d'une roue à rayons en traction traditionnelle. A titre indicatif, on a construit une roue avant de ce type avec une tension de rayons de 400 Newtons. Par comparaison, la tension des rayons varie entre 700 et 1400 Newtons pour une roue traditionnelle.

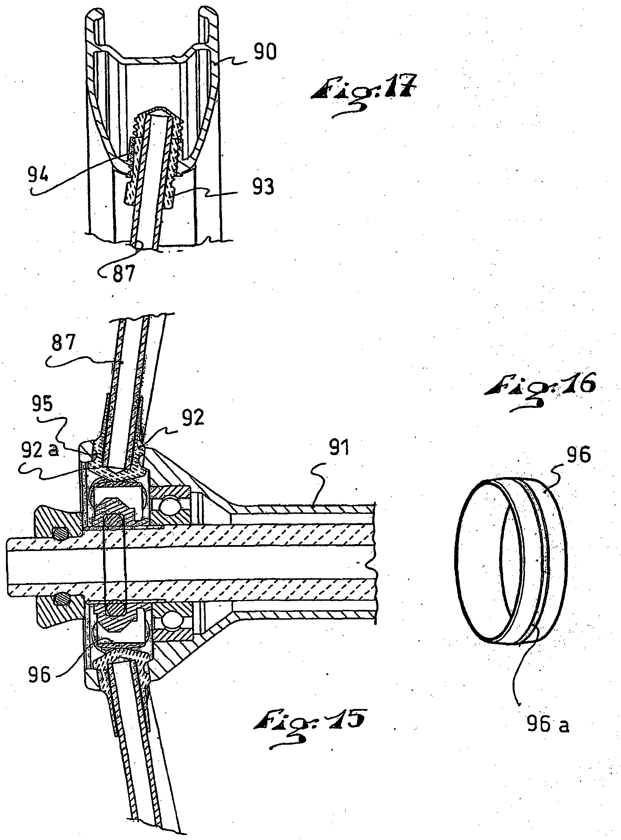

Les figures 15, 16 et 17 illustrent en référence à un rayon 87 un mode particulier de construction et d'accrochage des rayons conçu par exemple pour une roue avant. Comme précédemment, le rayon 87 a un corps tubulaire, par exemple réalisé en fibres de carbone noyées dans une matrice de résine. Chacune des extrémités du corps est collée dans un embout, respectivement 92 et 93 par lequel le rayon est accroché au moyeu 91 et à la jante 90.

L'embout 92 a une tête élargie 92a qui est retenue dans un orifice 95 du corps du moyeu 91. Les têtes élargies 92a sont maintenues en appui contre les orifices 95 à l'aide d'une bague 96. La surface extérieure de la bague est chanfreinée de part et d'autre d'une gorge circulaire 96a dans lequel la pointe de chaque tête élargie 92a se loge une fois que la bague est en place. Les dimensions de la bague sont déterminées pour qu'un tel engagement se produise en forçant légèrement sur la bague. Ainsi, une fois que la bague est en place, elle est maintenue de façon stable dans cette position.

La bague est construite avec une certaine élasticité pour permettre son engagement en force, en se déformant légèrement entre deux têtes élargies 92a successives. Egalement, la bague est construite de façon à résister à un effort de compression qu'une tête élargie 92a pourrait lui transmettre du fait d'une sollicitation en compression du rayon résultant d'une charge externe.

Par exemple, la bague est réalisée en une matière plastique ou composite, telle que résine acétal ou un alliage d'aluminium ou d'acier à ressort. D'autres matériaux pourraient également convenir.

L'embout 93 de liaison avec la jante a une extrémité filetée 94, et il est prévu pour être vissé dans un des orifices de la jante en forme de cheminée, comme l'embout 32 qui a été décrit relativement la figure 5.

Le jeu mécanique de liaison est neutralisé ici par des techniques similaires à celles utilisées pour augmenter le frottement dans les dispositifs de mise en tension des rayons et empêcher un desserrage intempestif. Par exemple on peut utiliser des additifs tels que de la colle 94 ou tout autre produit équivalent déposé sur les filets du filetage afin de combler l'espace entre les faces en regard des filets comme par exemple du polyamide tel que connu sous la dénomination commerciale Tuflock, ou Nylock. Cet espace sera de préférence comblé du côté opposé à l'effort de traction. On peut aussi déformer localement une zone filetée ainsi que cela est décrit dans la demande de brevet EP 1101631. Ces dispositifs doivent avoir une résistance suffisante pour s'opposer à une contrainte de compression transmise par le corps du rayon dans la plage admissible. D'autres techniques peuvent également convenir. Les rayons 86 sont accrochés à la jante et au moyeu de la même façon que ce qui vient être décrit relativement à un rayon 87.

L'assemblage de la roue est réalisé de la façon suivante. Les rayons sont mis en place au niveau du moyeu 91, puis leur tension est ajustée en vissant plus ou moins les embouts filetés 93 dans les orifices de la jante. Une fois que le réglage de tension initiale est effectué, on procède à la mise en place de la bague 96 dans le bulbe du moyeu sous les têtes élargies 92a pour immobilier les têtes élargies relativement au moyeu.

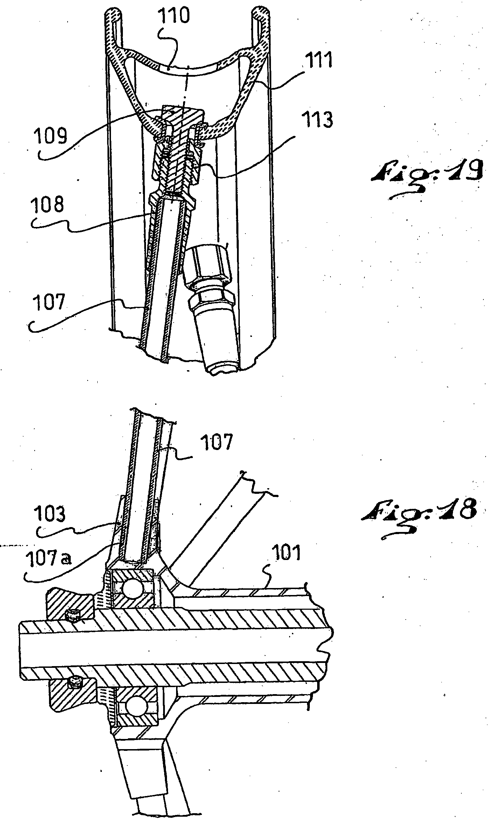

Les figures 18 et 19 illustrent une variante de construction. Selon cette variante, le corps du moyeu 101 a des branches radiales 103, chaque branche a un évidement central dans lequel extrémité 107a d'un rayon 107 est emmanchée et assemblée par tout moyen approprié, notamment par collage. Ainsi, le rayon 107 est accroché au moyeu directement, sans embout d'accrochage intermédiaire. L'extrémité 107a du rayon forme ici la tête d'accrochage du rayon au moyeu. La colle ou le moyen équivalent d'assemblage assure une neutralisation du jeu de liaison à ce niveau. Le moyeu peut être dans ce cas réalisé en deux ou trois parties indépendantes.

Ce mode d'accrochage, toutefois, ne permet pas une rotation du rayon qui avait lieu précédemment lors du réglage de tension. La figure 19 montre un mode d'accrochage du rayon à la jante qui respecte cette contrainte. L'extrémité du rayon 107 est prolongée par un embout 108 qui est assemblé par tout moyen approprié, notamment par emmanchement et collage. L'extrémité de l'embout 108 a un évidement central qui est taraudé, de façon à recevoir une vis 109 de réglage de tension. La vis 109 est accessible depuis l'extérieur de la jante par un orifice 110 réalisé dans le pont supérieur de la jante 111. Sa tête est retenue au niveau du pont inférieur, éventuellement elle est soutenue par un oeillet serti dans la paroi du pont. Elle forme une tête d'accrochage du rayon. La tête de la vis 109 présente tout moyen approprié permettant l'accouplement avec un outil de serrage. Ainsi, la tension du rayon 107 est ajustée en vissant plus ou moins la vis 109 dans l'embout 108 à l'aide d'un tel outil. De préférence, on prévoit sur la périphérie de l'embout 108 une forme d'accouplement avec un outil, par exemple de forme carrée, hexagonale ou de type Torx, qui permet à l'aide d'une clef de retenir l'extrémité du rayon pour éviter toute sollicitation en vrillage résultant du frottement entre la vis et l'embout.

Pour neutraliser le jeu mécanique de liaison entre le rayon et la jante, l'extrémité de l'embout 108 est filetée sur l'extérieur, et un contre-écrou 113 est serré contre la jante en prenant appui sur ce filetage. Ainsi, le rayon 107 est assemblé au moyeu et à la jante par des liaisons bidirectionnelles, et avec neutralisation du jeu mécanique de liaison, qui permet à chacun des rayons de supporter sans détente ni flambage un cycle de sollicitations de traction et de compression.

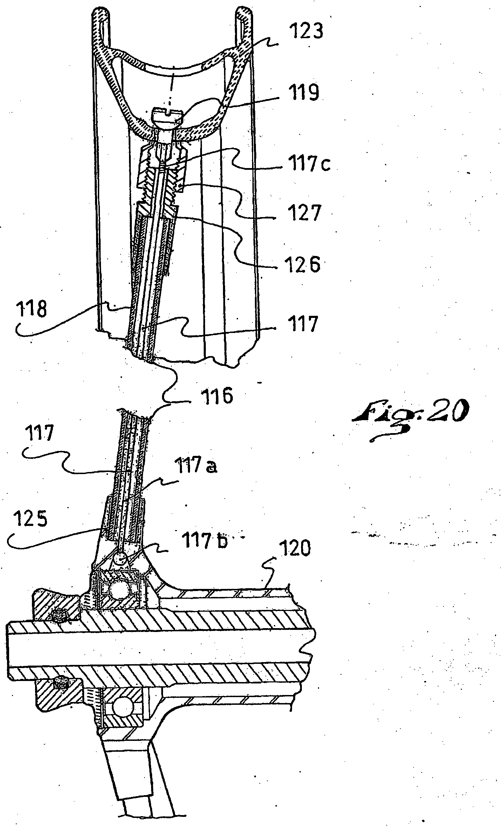

La figure 20 est relative à une variante de construction où le rayon 116 comprend une âme centrale 117 prévue pour être sollicitée en traction, et une gaine extérieure 118 tubulaire traversée par l'âme 117 et prévue pour travailler en compression. L'âme centrale 117 est construite par exemple comme un rayon métallique traditionnel, elle comprend un corps effilé 117a, une tête d'accrochage 117b qui est retenue dans le corps de moyeu 120, une extrémité filetée 117c sur laquelle un écrou de rayons 119 est vissé. L'écrou 119 traverse le pont inférieur de la jante 123, la tête d'écrou est retenue par le pont inférieur et elle est accessible depuis l'extérieur de la jante par un perçage du pont supérieur. La tête de l'écrou 119 forme la tête d'accrochage du rayon à la jante.

La gaine 118 est un élément tubulaire avec une première extrémité emmanchée dans une branche 125 du corps du moyeu 120. Son autre extrémité est emmanchée dans un embout 126 qui est prolongé par une extrémité filetée. Une douille 127 taraudée est vissée sur cette dernière extrémité filetée. Le sommet de la douille 127 est prévu pour venir en appui contre le pont inférieur de la jante 123, à la périphérie du trou que traverse l'écrou 119.

Comme dans le cas précédent, il est possible de prévoir à la périphérie de l'embout 126 et de la douille 127 une forme permettant l'accouplement avec un outil de maintien ou de serrage.

L'écrou 119 et la douille 127 sont ajustés de façon que les jeux mécaniques de liaison soient inexistants, et que la sollicitation résiduelle que ces éléments exercent sur la jante soit au repos une sollicitation de traction, c'est-à-dire que la précontrainte de traction de l'âme 117 soit supérieure à la précontrainte de compression de la gaine 118.

Ainsi, l'âme 117 et la gaine 118 établissent une liaison bidirectionnelle de chacune des extrémités du rayon avec la jante ou le moyeu. En outre, sous l'effet d'une charge externe, ces éléments sont aptes à transmettre une sollicitation de compression entre le moyeu et la jante sans détente ou flambage du rayon. La gaine 118 étant soumise en permanence à une sollicitation de compression, les emmanchements de ses extrémités sont facultatifs, un appui simple peut aussi convenir.

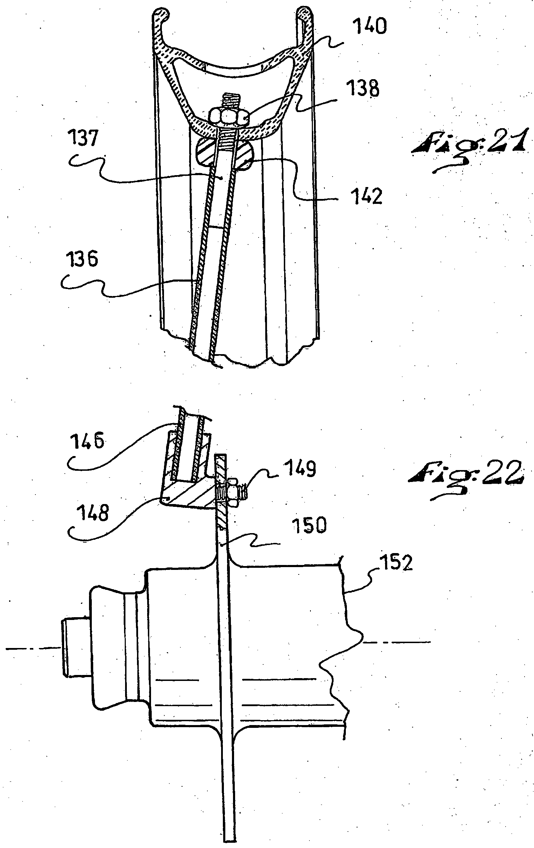

La figure 21 montre une variante de construction. Le corps du rayon 136, qui est un corps tubulaire, est prolongé à son extrémité par une portion d'accrochage 137 assemblée au corps 136 par tout moyen approprié et par exemple par collage. L'extrémité de la portion d'accrochage 137 est filetée, pour permettre son assemblage à la jante 140 avec un écrou 138, ou tout autre moyen d'accrochage approprié. L'écrou forme la tête d'accrochage de l'extrémité du rayon à la jante.

Un tampon 142 élastiquement déformable est placé en butée entre l'extrémité du corps tubulaire du rayon 136 et la jante 140. Ce tampon est traversé par la portion d'accrochage 137. Le tampon 142 est comprimé lors de la mise en tension du rayon 136 au moyen de l'écrou 138. Par contre, sa matière est suffisamment raide pour supporter sans déformation une sollicitation de compression dans la plage admissible de chargement du rayon en compression. Ainsi, la tension du rayon peut être ajustée, et le rayon est susceptible de supporter sans détente ni flambage un cycle de sollicitation de traction et de sollicitation de compression avec neutralisation du jeu de liaison. Le tampon peut être remplacé par une ou plusieurs rondelles Belleville ou un ressort de compression hélicoïdal.

Les modes de réalisation décrits précédemment se rapportent à des rayons droits, dont les extrémités d'accrochage se trouvent dans l'alignement du corps. Ce mode de construction est préféré pour une meilleure transmission des sollicitations de compression. Néanmoins il n'est pas limitatif. Pour illustrer cela, la figure 22 montre l'extrémité d'un rayon 146 encastrée dans un embout 148. L'embout 148 présente une extension latérale 149 qui est prévue pour être assemblée à l'aide d'un écrou à un disque radial 150 d'un corps de moyeu 152. L'embout avec son extension latérale forme la tête d'accrochage du rayon au moyeu. Un tel mode de liaison entre le rayon et le moyeu est compatible avec l'invention car il assure une liaison sans jeu en traction et compression entre le rayon et le moyeu pourvu que l'embout soit monté sans jeu contre le disque. Par contre, une liaison avec un disque radial qui serait réalisée au moyen d'une extrémité coudée traditionnelle de rayon ne répondrait pas au but recherché par l'invention. En effet, dans toute liaison de ce type, il existe un jeu même minime qui donne au rayon une phase de détente lors du passage d'une sollicitation en traction à une sollicitation en compression.

Naturellement, d'autres variantes de construction pourraient être adoptées. En particulier, on pourrait construire une roue avec une nappe de rayons ayant deux groupes de rayons, un premier groupe de rayons traditionnels, et un second groupe de rayons qui sont aptes à supporter une contrainte de traction, les rayons des deux groupes étant répartis de façon cyclique sur la jante, par exemple un rayon sur deux ou sur trois.

Également, il va de soi que les modes de réalisation décrits en relation avec la construction d'une roue arrière peuvent être appliqués également à une roue avant, et inversement. On pourrait également intervertir les modes d'accrochage du rayon à la jante et au moyeu.

Aussi les embouts avec les têtes d'accrochage pourraient être emmanchés à l'intérieur du corps de rayon au lieu d'être emmanchés sur l'extérieur.

Dans le cadre de rayons composites, notamment, on peut par exemple prévoir un collage du rayon au niveau de la jante (composite ou non) et le réglage au niveau du moyeu. Dans ce cas le réglage de rayons peut être général, c'est-à-dire collectif aux rayons, et non pas individuel. Dans le cas de rayons croisés, on peut également prévoir une liaison des rayons au niveau de leur croisement de façon à repousser les limites de flambage.

Le rayon n'a pas forcément une section constante en direction longitudinale et peut avoir une section de forme variable selon cette direction longitudinale, par exemple une section plus importante dans la zone médiane de façon à mieux résister au flambage.

Enfin, l'invention couvre également m engin de roulage, notamment un cycle qui serait équipé d'une roue au moins conforme à ce qui vient d'être décrit; De façon classique un cycle comprend un cadre, deux roues et un système de transmission.

## Revendications

1. Roue à rayons comprenant une jante périphérique (17, 90, 111, 123, 140), un moyeu central (18, 48, 58, 68, 78, 91, 101, 120, 152) et des rayons (26, 27, 46, 56, 66, 76, 86, 87, 107, 116, 136, 146) de liaison individuels entre la jante et le moyeu, les rayons étant tendus, et comprenant des moyens de réglage de tension d'au moins une partie des rayons (26, 46, 56, 66, 76, 86, 87, 107, 116, 136, 146), **caractérisée**

**en ce qu'**au moins une partie des rayons (26, 27, 46, 56, 66, 76, 86, 87, 107, 116, 136, 146) est apte à supporter un effort de compression R d'au moins 150 N en cours d'utilisation de la roue, **en ce que** chaque rayon supportant un effort de compression est tendu, à l'état initial, à une valeur de tension initiale Ti correspondant à une valeur de tension normale Tn diminuée d'une valeur correspondant à un effort de compression R pouvant être supporté par le rayon, de façon qu'en cours d'utilisation les rayons travaillent alternativement en traction et en compression, et **en ce que** chaque rayon comporte à chaque extrémité des liaisons bilatérales qui permettent de transmettre à la fois un effort de compression et de traction sans jeu.

2. Roue à rayons selon la revendication 1, **caractérisée en ce que**, pour une roue arrière, les rayons (26) supportant les efforts de compression sont ceux situés côté opposé roue libre.

3. Roue à rayons selon l'une des revendications 1 ou 2, **caractérisée en ce que** les deux nappes de rayons ne sont pas symétriques, l'une d'elle ayant un angle de parapluie inférieur à l'autre et par le fait que les rayons (26, 46, 56, 66, 76, 86, 87, 107, 117, 136, 146) supportant
les efforts de compression sont les rayons de la nappe ayant l'angle de parapluie le plus grand.

4. Roue à rayons selon l'une des revendications 1 à 3, **caractérisée en ce qu'**elle comporte un dispositif de neutralisation du jeu de liaison (35, 36, 94, 13, 127, 142) à au moins une extrémité de chaque rayon supportant un effort de compression apte à supporter au moins la contrainte de compression R.

5. Roue selon la revendication 4, **caractérisée par le fait que** ledit dispositif de neutralisation du jeu de liaison comprend :

    - un contre-écrou (35, 36, 113, 127) vissé sur une extrémité du rayon; ou bien
    - un tampon (142) élastiquement déformable placé en butée à l'extrémité du corps tubulaire du rayon (136) et traversé par une portion d'accrochage (137) à l'extrémité du rayon sur laquelle est vissé un écrou (138) qui forme la tête d'accrochage; ou bien
    - de la colle (94) déposée sur le dispositif de mise en tension du rayon (93) ou l'extrémité (107a) du rayon (107) ; ou bien
    - une bague (51, 62, 83, 96) logée à l'intérieur du corps de moyeu et en appui contre les têtes d'accrochage des rayons.

6. Roue à rayons selon l'une des revendications 1 à 5, **caractérisée en ce que** chaque rayon (26, 46, 56, 66, 76, 86, 87, 107, 116, 136, 146) supportant un effort de compression comprend un corps (30) définissant une direction longitudinale, deux têtes d'accrochage (31, 32) dans le prolongement du corps prévues pour être accrochées l'une au moyeu, l'autre à la jante, et **en ce que** la structure du corps (30) est apte à supporter sans flambage une charge de compression R appliquée entre ses deux têtes d'accrochage (31, 32, 47a, 57a, 67a, 77a, 93, 92a, 107a, 109, 117b, 119, 138, 148) selon la direction longitudinale du rayon.

7. Roue à rayons selon la revendication 8, **caractérisée en ce que** le rayon comprend au moins un dispositif (32a, 93, 117c) de mise en tension du corps entre ses deux têtes d'accrochage (31, 32).

8. Roue selon l'une des revendications 6 ou 7, **caractérisée par le fait que** les têtes d'accrochage (31, 32, 47a, 57a, 67a, 77a, 93, 92a, 109, 117b, 119, 138, 148) sont formées par deux embouts rapportés et assemblés aux extrémités du corps de rayon (30).

9. Roue selon l'une des revendications 6 à 8, **caractérisée par le fait qu'**une tête d'accrochage (31) comprend une tête élargie (31a, 47a, 57a, 67a, 77a, 92a, 117b).

10. Roue selon l'une des revendications 6 à 9, **caractérisée par le fait qu'**une tête d'accrochage (32) comprend une extrémité filetée (32a, 93, 117c).

11. Engin de roulage comprenant un cadre, deux roues et un système de transmission, **caractérisé par le fait qu'**une au moins de ses roues est conforme à l'une des revendications 1 à 10 précédentes.


**Patentansprüche**

1. Speichenrad umfassend eine periphere Felge (17, 90, 111, 123, 140), eine zentrale Nabe (18, 48, 58, 68, 78, 91, 101, 120, 152) und einzelne Speichen (26, 27, 46, 56, 66, 76, 86, 87, 107, 116, 136, 146) zur Verbindung zwischen der Felge und der Nabe, wobei die Speichen gespannt sind, und umfassend Mittel zum Einstellen der Spannung zumindest eines Teils der Speichen (26, 46, 56, 66, 76, 86, 87, 107, 116, 136, 146), **dadurch gekennzeichnet, dass** zumindest ein Teil der Speichen (26, 27, 46, 56, 66, 76, 86, 87, 107, 116, 136, 146) in der Lage ist, eine Druckkraft R von mindestens 150N während einer Benutzung des Rads zu ertragen, dadurch, dass jede eine Druckkraft ertragende Speiche im anfänglichen Zustand mit einer anfänglichen Spannung Ti gespannt ist, die einem Wert einer normalen Spannung Tn abzüglich eines Wertes entspricht, der einer Druckkraft R entspricht, die von der Speiche ertragen werden kann, so dass die Speichen während der Benutzung abwechselnd unter Zug und Druck arbeiten, und dadurch, dass jede Speiche an jedem Ende bilaterale Verbindungen umfasst, die es ermöglichen, sowohl eine Druck- als auch eine Zugkraft ohne Spiel zu übertragen.

**2.** Speichenrad nach Anspruch 1, **dadurch gekennzeichnet, dass**, für ein hinteres Rad, die Speichen (26), die die Druckkräfte ertragen, diejenigen sind, die auf der dem freirollenden Rad entgegengesetzten Seite angeordnet sind.

**3.** Speichenrad nach einem der Ansprüche 1 bis 2, **dadurch gekennzeichnet, dass** die zwei Speichenlagen nicht symmetrisch sind, wobei eine davon einen Schirmwinkel aufweist, der kleiner als der andere ist, und dadurch, dass die die Druckkräfte ertragenden Speichen (26, 46, 56, 66, 76, 86, 87, 107, 117, 136, 146) die Speichen der Lage mit dem größeren Schirmwinkel sind.

**4.** Speichenrad nach einem der Ansprüche 1 bis 3, **dadurch gekennzeichnet, dass** es eine Vorrichtung (35, 36, 94, 113, 127, 142) zur Neutralisierung des Spiels der Verbindung an zumindest einem Ende jeder eine Druckkraft ertragenden Speiche umfasst, die in der Lage ist, zumindest die Druckbeanspruchung R zu ertragen.

**5.** Speichenrad nach Anspruch 4, **dadurch gekennzeichnet, dass** die Vorrichtung zur Neutralisierung des Spiels der Verbindung Folgendes umfasst:

- eine auf ein Ende der Speiche geschraubte Gegenmutter (35, 36, 113, 127); oder
- einen elastisch verformbaren Puffer (142), der am Ende des rohrförmigen Körpers der Speiche (136) anstoßend angeordnet und von einem Verankerungsteil (137) am Ende der Speiche durchquert ist, auf welchem eine Mutter (138) verschraubt ist, die den Verankerungskopf bildet; oder
- Klebstoff (94), der auf der Vorrichtung zum Unterspannungsetzen der Speiche (93) oder auf dem Ende (107a) der Speiche (107) aufgetragen ist; oder
- einen Ring (51, 62, 83, 96), der innerhalb des Nabenkörpers angeordnet und gegen die Verankerungsköpfe der Speichen gestützt ist.

**6.** Speichenrad nach einem der Ansprüche 1 bis 5, **dadurch gekennzeichnet, dass** jede eine Druckkraft ertragende Speiche (26, 46, 56, 66, 76, 86, 87, 107, 116, 136, 146) einen Körper (30) umfasst, der eine Längsrichtung definiert, sowie zwei Verankerungsköpfe (31, 32) in der Verlängerung des Körpers, wobei der eine angepasst ist, um an der Nabe verankert zu werden, während der andere angepasst ist, um an der Felge verankert zu werden, und dadurch, dass die Struktur des Körpers (30) geeignet ist, ohne Knicken eine Drucklast R zu ertragen, die zwischen ihren beiden Verankerungsköpfen (31, 32, 47a, 57a, 67a, 77a, 93, 92a, 107a, 109, 117b, 119, 138, 148) entlang der Längsrichtung der Speiche ausgeübt wird.

**7.** Speichenrad nach Anspruch 6, **dadurch gekennzeichnet, dass** die Speiche zumindest eine Vorrichtung (32a, 93, 117c) zum Unterspannungsetzen des Körpers zwischen seinen zwei Verankerungsköpfen (31, 32) umfasst.

**8.** Rad nach einem der Ansprüche 6 oder 7, **dadurch gekennzeichnet, dass** die Verankerungsköpfe (31, 32, 47a, 57a, 67a, 77a, 93, 92a, 109, 117b, 119, 138, 148) durch zwei Ansätze gebildet sind, die an den Enden des Speichenkörpers (30) aufgesetzt und montiert sind.

**9.** Rad nach einem der Ansprüche 6 bis 8, **dadurch gekennzeichnet, dass** ein Verankerungskopf (31) einen geweiteten Kopf (31a, 47a, 57a, 67a, 77a, 92a, 117b) umfasst.

**10.** Rad nach einem der Ansprüche 6 bis 9, **dadurch gekennzeichnet, dass** ein Verankerungskopf (32) ein mit einem Gewinde versehenes Ende (32a, 93, 117c) umfasst.

**11.** Rollgerät umfassend einen Rahmen, zwei Räder und ein Antriebssystem, **dadurch gekennzeichnet, dass** mindestens eines seiner Räder gemäß einem der vorherigen Ansprüche 1 bis 10 ist.

**Claims**

**1.** Spoke wheel comprising a peripheral rim (17, 90, 111, 123, 140), a central hub (18, 48, 58, 68, 78, 91, 101, 120, 152) and individual connection spokes (26, 27, 46, 56, 66, 76, 86, 87, 107, 116, 136, 146) between the rim and the hub, wherein the spokes are tensed, and comprising means for adjusting a tension of at least one part of the spokes (26, 46, 56, 66, 76, 86, 87, 07, 116, 136, 146), **characterized in that** at least one part of the spokes (26, 27, 46, 56, 66, 76, 86, 87, 107, 116, 136, 146) is capable of sustaining a compression force R of at least 150N during a use of the wheel, **in that** each spoke sustaining a compression force is tensed in the initial state at an initial tension value Ti corresponding to a normal tension value Tn reduced by a value corresponding to a compression force R that can be sustained by the spoke, so that the spokes can operate during the use alternatively in tension and compression, and **in**

**that** each spoke comprises at each end bilateral connections enabling to transmit both a compression and tension force without play.

2. Spoke wheel according to claim 1, **characterized in that**, for a back wheel, the spokes (26) sustaining the compression forces are those located on the side opposite the free wheel.

3. Spoke wheel according to any one of claims 1 to 2, **characterized in that** the two sets of spokes are not symmetrical, one of them having an umbrella angle that is smaller than the other and **in that** the spokes (26, 46, 56, 66, 76, 86, 87, 107, 117, 136, 146) sustaining the compression forces are the spokes of the set having the larger umbrella angle.

4. Spoke wheel according to any one of claims 1 to 3, **characterized in that** it comprises a device (35, 36, 94, 113, 127, 142) for neutralizing the connection play at at least one end of each spoke sustaining a compression force that is capable of sustaining at least the compression constraint R.

5. Wheel according to claim 4, **characterized in that** said device for neutralizing the connection play comprises:

   - a lock nut (35, 36, 113, 127) screwed on an end of the spoke; or
   - an elastically deformable buffer (142) abutting at the end of the tubular body of the spoke (136) and crossed by a fastening part (137) at the end of the spoke on which a nut (138) forming the fastening head is screwed; or
   - glue (94) placed on the device for tensing the spoke (93) or the end (107a) of the spoke (107); or
   - a ring (51, 62, 83, 96) accommodated within the hub body and abutting against the fastening heads of the spokes.

6. Spoke wheel according to any one of claims 1 to 5, **characterized in that** each spoke (26, 46, 56, 66, 76, 86, 87, 107, 116, 136, 146) sustaining a compression force comprises a body (30) defining a longitudinal direction, two fastening heads (31, 32) in the prolongation of the body, one for being fastened to the hub, the other to the rim, and **in that** the structure of the body (30) is capable of sustaining without bending a compression load R applied between its two fastening heads (31, 32, 47a, 57a, 67a, 77a, 93, 92a, 107a, 109, 117b, 119, 138, 148) along the longitudinal direction of the spoke.

7. Spoke wheel according to claim 6, **characterized in that** the spoke comprises at least one device (32a, 93, 117c) for tensing the body between its two fastening heads (31, 32).

8. Wheel according to one of claims 6 or 7, **characterized in that** the fastening heads (31, 32, 47a, 57a, 67a, 77a, 93, 92a, 109, 117b, 119, 138, 148) are formed by two pieces that are applied and assembled to the ends of the body of the spoke (30).

9. Wheel according to one of claims 6 to 8, **characterized in that** a fastening head (31) comprises an enlarged head (31a, 47a, 57a, 67a, 77a, 92a, 117b).

10. Wheel according to one of claims 6 to 9, **characterized in that** a fastening head (32) comprises a threaded end (32a, 93, 117c).

11. Rolling device comprising a frame, two wheels and a transmission system, **characterized in that** at least one of its wheels is compliant with one of the previous claims 1 to 10.

Fig. 1

Fig. 2

14

Fig. 3

Fig. 3a

Fig. 4

*Fig:5*

*Fig. 6*

*Fig. 7*

Fig. 8

Fig. 9

*Fig:10*

*Fig. 11*

Fig. 12

Fig. 13

*Fig. 14*

90

87

86

91

90

*Fig.17*

94

93

87

87

*Fig.16*

95

92

92 a

91

96

*Fig.15*

96

96 a

Fig. 19

Fig. 18

123

119

117c

127

126

118

117

116

Fig.20

117

117 a

125

117 b

120

*Fig.21*

*Fig.22*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 91759
- EP 1283112 A
- WO 2004033231 A
- FR 2701899
- EP 1016552 A
- WO 2004108515 A
- EP 1316442 A
- FR 1019285
- EP 818328 A
- EP 896886 A
- EP 1101631 A